# EUROPÄISCHE PATENTSCHRIFT

(11) **EP 1 031 468 B1**
(45) Veröffentlichungstag und Bekanntmachung des Hinweises auf die Patenterteilung: **25.09.2002**
(21) Anmeldenummer: 99103695.5
(22) Anmeldetag: 25.02.1999
(51) Int. Cl.: B60R 21/00

(54) **Vorrichtung und Verfahren zum Erfassen eines Objektes oder einer Person im Innenraum eines Fahrzeugs**
Method and device for the detection of an object or a person in the interior of a vehicle
Procédé et dispositif pour la détection d'un objet ou une personne à l'intérieur d'un véhicule

(43) Veröffentlichungstag der Anmeldung: 30.08.2000
(73) Patentinhaber: SIEMENS AKTIENGESELLSCHAFT, 80333 München (DE)
(72) Erfinder: Roth, Christoph, Dr., Tokyo 141-8641 Shinagawa-Ku (JP); Hamperl, Reinhard, 93096 Köfering (DE); Rösl, Reinhard, 93173 Wenzenbach (DE); Waldmann, Alexander, 93059 Regensburg (DE); Stierle, Thomas, 93059 Regensburg (DE); Mader, Gerhard, Dr., 93107 Thalmassing (DE)

(56) Entgegenhaltungen:
- GB-A- 2 324 864
- US-A- 5 835 613

## Beschreibung

Die Erfindung betrifft eine Vorrichtung und ein Verfahren zum Erfassen eines Objektes oder einer Person im Innenraum eines Fahrzeugs gemäß Oberbegriff der Patentansprüche 1 und 11.

Weit in Richtung Armaturenbrett vorverlagerte Personen wie auch Kinder in sogenannten Reboard-Kindersitzen auf dem Beifahrersitz sind während des Fahrzeugbetriebes eines mit Airbag versehenen Kraftfahrzeuges der Gefahr ausgesetzt, durch die Aufblaswucht des Airbags bei einem Unfall Verletzungen zu erleiden. Moderne Steuerungssysteme für den Personenschutz sind bestrebt, den Airbag in derartigen Situationen abzuschalten oder mit verminderter Wucht aufzublasen, um die Gefahr einer Verletzung eines Insassen abzuwenden. Zur Ermittlung der Insassenposition im Fahrzeug werden vorzugsweise berührungslose, optische Sensoren eingesetzt.

Eine Vorrichtung und ein Verfahren zum berührungslosen Erkennen eines Objektes oder einer Person im Innenraum eines Fahrzeugs gemäß Oberbegriff der Patentansprüche 1 und 11 ist aus der EP 0 669 227 A1 bekannt. Dabei wird der Fahrzeugsitz durch eine Anzahl von Leuchtdioden bestrahlt. Vom Sitz bzw. einer Person oder einem Objekt auf dem Fahrzeugsitz reflektierte Strahlen werden durch ein Fotodetektorfeld aufgenommen.

Als Lichtquelle des optsichen Erfassungssystems wird vorzugsweise ein Laser eingesetzt, der eine aufgrund seiner monochromen Strahlung eine ortsgenaue Abtastung ermöglicht. Gewöhnlich werden Laserdioden und insbesondere Halbleiterlaserdioden als Sender verwendet.

Um eine andauernde energetische Belastung von Personen im Fahrzeuginnenraum durch den Laser zu vermeiden, wird der Laser pulsbetrieben. Aber auch in diesem Betriebsmodus darf der Insasse keinesfalls aufgrund der ausgesendeten Laserpulse gesundheitlich beeinträchtigt werden.

Aufgabe der Erfindung ist es, ausgehend von der bekannten Vorrichtung und dem bekannten Verfahren zum Erfassen eines Objektes oder einer Person im Innenraum eines Fahrzeugs Vorkehrungen zu treffen, die eine Verwendung eines Lasers innerhalb einer Erfassungsvorrichtung ohne Beeinträchtigung des Gesundheitszustandes eines Kraftfahrzeuginsassen erlauben.

Der die Vorrichtung betreffende Teil der Erfindungsaufgabe wird durch die Merkmale des Patentanspruchs 1 gelöst. Der das Verfahren betreffende Teil der Erfindungsaufgabe wird durch die Merkmale des Patentanspruchs 11 gelöst.

Dabei wird erfindungsgemäß eine für die Sendeenergie des Lasers maßgebende Kenngröße mit einer geeigneten Einrichtung erfaßt und aufgrund einer Auswertung dieser Kenngröße die Sendeenergie im folgenden verringert, wobei der folgende emittierte Laserpuls einen reduzierten Energieinhalt aufweist. Alternativ wird das Ausgeben von Laserpulsen gänzlich unterbunden. Zum Reduzieren des Energieinhaltes eines folgenden Laserpulses wird vorzugsweise dessen Leitstung und/oder dessen Pulsdauer verringert.

Die Erfindung bietet den Vorteil, daß ein Fahrzeuginsasse, der sich im Strahlungsbereich des Lasers befindet, zu keinem Zeitpunkt einer Überdosis an Laser-Strahlungsenergie ausgesetzt ist. Durch die Erfindung können sämtliche Normen über die Strahlungsbelastung von Personen bei der Verwendung von Lasern, z. B. die IEC-Norm eingehalten werden.

Der Insasse wird auch vor einer Fehlfunktion einer den Laser betreibenden Steuereinheit geschützt: Eine solche gewöhnlich als Mikroprozessor ausgebildete Steuereinheit betreibt den Laser und bestimmt damit Pulsweite sowie Leistung der einzelnen Laserpulse. Infolge einer Fehlfunktion dieser Steuereinheit kann z. B. die Pulsweite in der Software oder der Hardware der Steuereinheit auf unendlich gesetzt werden. Damit wird ein Laserdauerlicht emittiert. Ist der Laser über eine durch die Steuereinheit steuerbare elektrische Leistungsstufe mit einer Energiequelle verbunden, so erlaubt die Erfindung ferner, daß der Insasse trotz defekter und dauerhaft leitend geschalteter Leistungsstufe dennoch vor einer überhöhten Strahlenbelastung geschützt wird.

Die erfindungsgemäße Vorrichtung erkennt eine solche Dauerbestrahlung daran, daß die Erfassungseinrichtung eine für die Sendeenergie des Lasers maßgebende Kenngröße, wie insbesondere den Energieinhalt eines Laserpulses, die Sendeleistung oder einen Sendepegel aufnimmt. Die Steuereinrichtung wertet im folgenden die aufgenommene Kenngröße/Kenngrößen aus. Wird eine erhöhte Energieabgabe des Lasers und eine damit verbundene erhöhte Bestrahlung des Insassen erkannt, so wird die Sendeenergie verringert oder die Energieabgabe des Lasers gänzlich unterbunden.

Die Erfassungseinrichtung ist vorzugsweise zum Erfassen einer Kenngröße für die elektrische Betriebsenergie des Lasers wie z. B. zum Erfassen seines Betriebsstromes ausgebildet, oder aber zum Erfassen einer Kenngröße für die optisch abgestrahlte Energie des Lasers, vorzugsweise mit Hilfe eines optischen Empfängers. Wegen der proportionalen Beziehung zwischen der Betriebsenergie für einen Laser und der von dem Laser abgestrahlten Energie sind beide Energiegrößen ein Maß für die Sendeenergie des Lasers. Diese Auswahlmöglichkeit bei der Kenngrößenermittlung erlaubt die Herstellung einer aufwandsarmen Vorrichtung je nach Anwendungsfall.

In vorteilhaften Weiterbildungen der Erfindung wird die Kenngröße entweder durch Auswertung eines einzelnen Laserpulses ermittelt oder auf Grundlage einer Auswertung mehrerer Laserpulse, insbesondere innerhalb einer vorgegebenen Zeitspanne.

Vorzugsweise werden Kenngrößen sowohl aus der erstgenannten Kurzzeitbetrachtung wie auch aus der letztgenannten Langzeitbetrachtung abgeleitet. Die Steuereinrichtung wird dann als Stellglied zum Verringern oder Unterbinden der Sendeenergieabgabe nur tätig, wenn sowohl die Langzeit-Kenngröße als auch die Kurzzeit-Kenngröße vorgegebene Grenzwerte überschreiten und damit einen stetig instabilen Betriebsmodus des Lasers bzw. seiner Ansteuerkomponenten feststellen.

Die Steuereinrichtung ist in einer vorteilhaften Weiterbildung der Erfindung in ihrer Hardware getrennt von der Hardware der den Laser im Normalbetrieb steuernden Steuereinheit ausgebildet. Ist eine fehlerhafte Steuereinheit Ursache für einen Laserdauerpuls, so wird dies mit Hilfe der räumlich getrennt aufgebauten Steuereinrichtung erkannt.

Weitere vorteilhafte Weiterbildungen der Erfindung sind durch die Unteransprüche gekennzeichnet.

Ausführungsbeispiele der Erfindung und ihrer Weiterbildungen werden anhand der Zeichnungen näher erläutert. Es zeigen:
- Figur 1: eine Fahrgastzelle im Querschnitt,
- Figur 2: ein Blockschaltbild der erfindungsgemäßen Vorrichtung, und
- Figuren 3 bis 5: elektrische Schaltbilder der erfindungsgemäßen Vorrichtung.

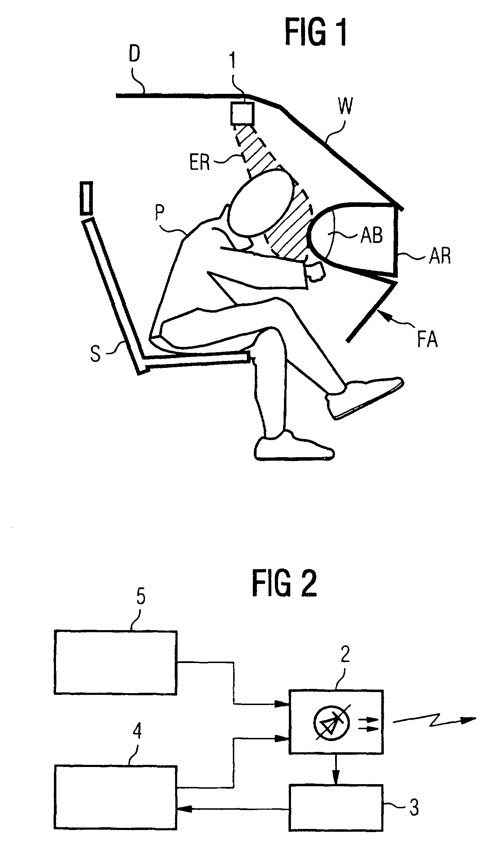

Figur 1 zeigt einen Querschnitt der vorderen Fahrgastzelle, beifahrerseitig, wobei alle Elemente symbolisch eingezeichnet sind. Dabei ist der Fahrzeuginnenraum durch ein Dach D, eine Windschutzscheibe W, ein Armaturenbrett AR und ein Fußablage FA begrenzt. Zur Abgrenzung des Fahrzeuginnenraums muß jedoch nicht notwendigerweise das Dach D und damit eine geschlossene Fahrgastzelle vorhanden sein. Es ist ein Fahrzeugsitz S ersichtlich, auf dem eine Person P in vorverlagerter Oberkörperposition sitzt. Am Dach D ist eine Vorrichtung 1 zum Erfassen eines Objektes oder einer Person angeordnet. Diese Einrichtung weist einen eingezeichneten Wirkungsbereich ER auf. Das Armaturenbrett AR enthält ein Beifahrerairbagmodul AB im zusammengefalteten Zustand. In entfaltetem Zustand schießt der Beifahrerairbag in Richtung Kopf der eingezeichneten Person P. Es ist ersichtlich, daß mit der eingezeichneten Objekterfassungseinrichtung der Gefahrenbereich vor einem zusammengefalteten Airbagmodul AB in Aufblasrichtung überwacht werden soll. Wird ein Insasse oder ein Kindersitz in diesem Wirkungsbereich ER erkannt, so wird ein Auslösen des Beifahrerairbagmoduls AB verhindert oder geeignet dosiert. Die Vorrichtung 1 kann jedoch auch auf den Fahrzeugsitz S gerichtet sein und eine Abweichung einer Person aus seiner normalen Sitzposition erfassen. Es sind auch Vorrichtungen bekannt, die den gesamten vorderen Fahrzeuginnenraum mit einer Mehrzahl von Sensoren abtasten und jegliche Arten von Objektoder Personenpositionen aufnehmen können. Die Erfindung ist also nicht beschränkt auf das konkrete Erfassen eines Abbildes eines Objektes oder einer Person sondern insbesondere auch zur Überwachung eines bestimmten Bereiches oder einer bestimmten Zone im Fahrzeuginnenraum auf das Vorhandensein eines Objektes oder einer Person. Die Einrichtung ist dabei zur berührungslosen Erfassung ausgebildet.

Der Sensor der Vorrichtung tastet seinen Wirkungsbereich mittels optischer Strahlung, insbesondere infraroter Strahlung ab. Es sind aber auch Strahlungen mit anderen Wellenlängen anwendbar. Der Sensor enthält dabei ein Leuchtdiode, insbesondere einen Infrarotsender in Form einer Laserdiode, der eine oder mehrere Strahlen oder Strahlungsvorhänge aussendet. Der Sensor enthält ferner ein oder mehrere optische Empfangselemente in Form von Fotozellen, die die an einem Objekt oder einer Person reflektierte gestreute Strahlung aufnehmen. Durch Auswertung der gestreuten Strahlung kann der Abstand zwischen dem Sensor und dem Objekt sowie gegebenenfalls eine Konturierung und genaue Positionsbestimmung im zwei- oder dreidimensionalen Raum bestimmt werden. Vorzugsweise spannt der Sensor mehrere in Fahrtrichtung hintereinandergestaffelte Strahlenvorhänge in der vertikalen Ebene auf und enthält hinsichtlich der Querachse des Fahrzeugs mehrere Empfangselemente je Strahlenvorhang. So ist eine dreidimensionale Personenoder Objekterkennung gewährleistet, da jedes Empfangselement einen Information zweidimensionaler Wertigkeit liefert und die dritte, vertikale Dimension durch eine Auswertung der Stärke, der Leistung oder des Energieinhalts einer reflektierten Strahlung gewonnen wird. Eine Erfassungseinrichtung mit einfachen technischen Mitteln weist z.B. nur eine den Entfaltungsraum des Airbgas abtastende Lichtschranke auf. Eine Objekt- oder Personenposition wird vorzugsweise mit Hilfe der Methoden der Laufzeitmessung oder der Triangulation ermittelt.

Figur 2 zeigt ein Blockschaltbild der erfindungsgemäßen Vorrichtung mit einem Laser 2 zum Aussenden von Laserpulsen gesteuert durch eine Steuereinheit 5. Eine Erfassungseinrichtung 3 dient dem Aufnehmen einer für die Sendeenergie maßgebenden Kenngröße. Eine Steuereinrichtung 4 wertet die aufgenommene Kenngröße aus und greift ggf. in die Steuerung des Lasers 2 ein.

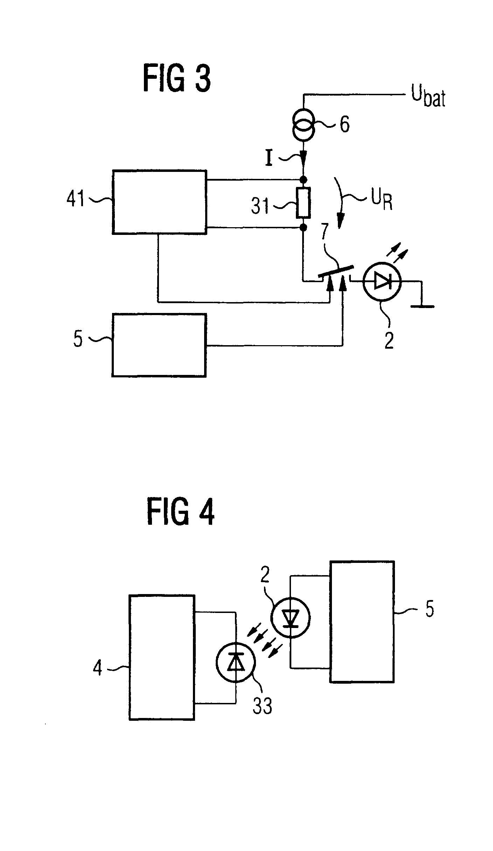

Figur 3 zeigt einen ersten Schaltplan einer erfindungsgemäßen Vorrichtung. Dabei ist der Laser 2 in Form einer Laserdiode in einem Stromkreis mit einer als Stromquelle ausgebildeten Energiequelle 6, einer als Schalttransistor ausgebildeten Leistungsstufe 7 sowie einer als Strommeßwiderstand 31 Erfassungseinrichtung angeordnet. Die Leistungsstufe 7 wird durch die Steuereinheit 5 abwechselnd leitend und sperrend geschaltet, wodurch der Laser 2 gepulstes Laserlicht aussendet. Eine als Mikroprozessor 41 ausgebildete Steuereinrichtung nimmt den Spannungsabfall U_{R} am Strommeßwiderstand 31 als Maß für den ihn durchfließenden und den Laser 2 betreibenden Strom I auf. Als für die Sendeenergie des Lasers 2 maßgebende erfaßte Kenngröße dient also der Betriebsstrom I für den Laser, der ein Maß für die Sendeenergie des Lasers darstellt. Aus dem Betriebsstrom I läßt sich die Sendeleistung des Lasers 2 ableiten, vorzugsweise anhand einer Kennlinie. Ferner wird auch die Pulsdauer eines Laserpulses durch die Steuereinrichtung 41 erfaßt. Das Produkt aus der ermittelten Leistung und der ermittelten Pulsdauer ergibt den Energieinhalt des Laserpulses, der mit einem Grenzwert verglichen wird. Bei zu erwartender konstanter Leistungsabgabe des Lasers kann der Energieinhalt eines Laserpulses durch Integration der Leistung ab Pulsbeginn ermittelt werden. Überschreitet der ermittelte Energieinhalt einen Grenzwert, so greift die Steuereinrichtung 41 in die Steuerung der Leistungsstufe 7 ein. Dabei wird dem Steuersignal der Steuereinrichtung 41 mehr Gewicht beigemessen als dem Steuersignal der Steuereinheit 5, so daß selbst wenn die Steuereinheit 5 die Leistungsstufe 7 weiterhin leitend schalten will, die Leistungsstufe 7 aufgrund eines entsprechenden Signals der Steuereinrichtung 41 gesperrt wird.

Figur 4 zeigt lediglich schematisch ein weiteres elektrisches Schaltbild einer erfindungsgemäßen Vorrichtung. Dabei betätigt eine Steuereinheit 5 einen Laser 2. Zum Erfassen einer Kenngröße für die abgestrahlte Energie dient eine für Licht der Laserwellenlänge empfindliche Fotodiode 33, die mit einer Steuereinrichtung 4 verbunden ist. Dabei nimmt der optische Empfänger 33 den vom Laser 2 ausgesendeten Laserimpuls auf und wandelt ihn in einen elektrischen Impuls um, der durch die Steuereinrichtung 4 ausgewertet wird. Bei diesem Ausführungsbeispiel wird nicht die Betriebsenergie des Lasers sondern seine abgestrahlte Energie überwacht. Dazu ist der Empfänger vorzugsweise derart angeordnet und ausgebildet, daß er die abgestrahlten Sendenergie vollständig aufnehmen kann. In besonderer Art und Weise sind dazu optische Einrichtungen vorgesehen, die auf kleinstem Raum eine Laserdiode wie auch eine Fotodiode beinhalten. Die Auswertung des von dem optischen Empfänger 33 gelieferten Signals wie auch das Eingriffsverfahren in die Ansteuerung des Lasers 2 erfolgt nach nach den Ausführungen zu Figur 3.

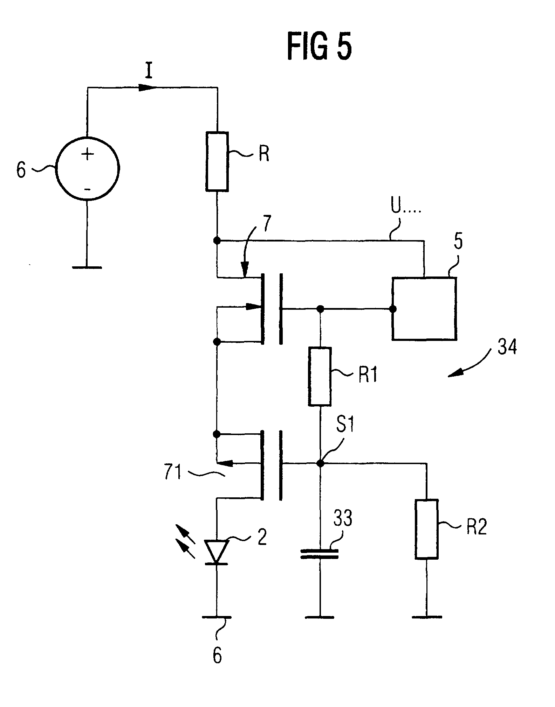

Figur 5 zeigt ein weiteres Ausführungsbeispiel der erfindungsgemäßen Vorrichtung mit einem Stromkreis bestehend aus einem Widerstand R, einer Leistungsstufe 7, einer weiteren Leistungsstufe 71 und einem Laser 2 zwischen den Polen einer Energiequelle 6. Die Leistungsstufe 7 wird durch die Steuereinheit 5 abwechselnd leitend und sperrend geschaltet. Sind die Leistungsstufe 7 und die weitere Leistungsstufe 71 gleichzeitig leitend geschaltet, so sendet der Laser 2 einen Lichtimpuls von entsprechender Dauer aus.

Bei dieser vorteilhaften Weiterbildung der Erfindung wird das Ansteuersignal der Leistungsstufe 7 erfaßt und überwacht. Für den Fall eines konstanten Stromflusses I bei entsprechend gesteuerten Leistungsstufen 7 und 71 im Stromkreis ist der Sendeenergieinhalt allein bestimmt durch die Pulsdauer der Bestromung. Die Pulsdauer wird durch die Steuereinheit 5 über das Ansteuersignal für die Leistungsstufe 7 vorgegeben.

Das Ansteuersignal der Leistungsstufe 7 ist in seiner Spannung derart ausgebildet, daß die Leistungsstufe 7 durch das Ansteuersignal leitend geschlaltet wird. Die weitere Leistungsstufe 71 ist invertiert ausgebildet, sodaß die über den Widerstand R1 am Steuereingang der weiteren Leistungsstufe 71 anliegende Spannung gering ausgebildet ist und damit die weitere Leistungsstufe 71 leitend geschaltet ist. Über den Widerstand R1 wird der Kondensator 33 durch das Ansteuersignal aufgeladen. Mit zunehmender Aufladung des Kondensators 33 steigt die Spannung am Schaltungspunkt 1 an. Technologiebedingt kippt die steuerbare Leistungsstufe 71 ab einem bestimmten Spannungswert am Schaltungspunkt 1 von ihrem leitenden Zustand in ihren sperrenden Zustand. Dabei ist die Schaltungsanordnung gemäß Figur 5 derart bemessen, daß bei normalen Pulsbreiten der Ansteuerimpulse für die Leistungsstufe 7 der Spannungsgrenzwert am Schaltungspunkt 1 durch das Aufladen des Kondensators 33 zum Ändern des Schaltzustandes der Leistungsstufe 71 nicht erreicht wird. Nur für den Fall, daß z. B. aufgrund eines Defekts der Steuereinheit 5 anstelle eines kurzzeitigen Ansteuerimpulses ein lange andauerndes Gleichsignal ausgegeben wird, steigt die Spannung am Schaltungspunkt S1 auf ein Maß an, das ein Ändern des Schaltzustandes der Leistungsstufe 71 vom leitenden Zustand in den sperrenden Zustand bewirkt.

Ist der Ansteuerimpuls der Steuereinheit 5 ausreichend kurz, so entlädt sich in der folgenden Lowpegelphase des Ansteuersignals der Kondensator 33 über den Widerstand R2 ohne daß der Kippunkt der Leistungsstufe 71 erreicht wurde.

## Patentansprüche

1. Vorrichtung zum Erfassen eines Objektes oder einer Person im Innenraum eines Fahrzeugs,
- mit einem Laser (2) zum Aussenden eines Laserpulses,
**dadurch gekennzeichnet,**
- **daß** eine Erfassungseinrichtung (3) vorgesehen ist zum Erfassen einer Kenngröße für die Sendeenergie des Lasers (2), und
- **daß** eine Steuereinrichtung (4) vorgesehen ist zum Verringern der Sendeenergie oder zum Unterbinden der Abgabe eines Laserpulses abhängig von der erfaßten Kenngröße.

2. Vorrichtung nach Anspruch 1, **dadurch gekennzeichnet, daß** die Erfassungseinrichtung (3) zum Erfassen der Kenngröße eines Laserpulses ausgebildet ist.

3. Vorrichtung nach Anspruch 1 oder Anspruch 2, **dadurch gekennzeichnet, daß** die Erfassungseinrichtung (3) zum Erfassen der Kenngröße auf Grundlage mehrerer ausgesendeter Laserpulse ausgebildet ist.

4. Vorrichtung nach einem der vorhergehenden Ansprüche, **dadurch gekennzeichnet, daß** die Erfassungseinrichtung (3) zum Erfassen einer Kenngröße für die elektrischen Betriebsenergie des Lasers (2) ausgebildet ist.

5. Vorrichtung nach einem der vorhergehenden Ansprüche, **dadurch gekennzeichnet, daß** die Erfassungseinrichtung (3) zum Erfassen einer Kenngröße für die abgestrahlten Energie des Lasers (2) ausgebildet ist.

6. Vorrichtung nach Anspruch 5, **dadurch gekennzeichnet, daß** die Erfassungseinrichtung (3) einen optischen Empfänger (33) für den Laserpuls enthält.

7. Vorrichtung nach einem der vorhergehenden Ansprüche, **dadurch gekennzeichnet, daß** die Steuereinrichung (4) einen Vergleicher (41) zum Vergleichen der aufgenommenen Energie mit einem Grenzwert (G) enthält.

8. Vorrichtung nach Anspruch 7, **dadurch gekennzeichnet, daß** die Steuereinrichtung (4) bei Überschreiten des Grenzwertes (G) den Laser (2) von seiner Energieversorgung (6) trennt.

9. Vorrichtung nach einem der vorhergehenden Ansprüche, **dadurch gekennzeichnet, daß** eine Steuer- und Auswerteeinheit (5) zum Betreiben des Lasers (2) und zum Auswerten von an einem Objekt oder einer Person (P) reflektierten Laserpulsen vorgesehen ist, und daß die Steuereinrichtung (4) und die Steuereinheit (5) räumlich getrennt voneinander ausgebildet sind.

10. Vorrichtung nach Anspruch 1 und Anspruch 2, **dadurch gekennzeichnet, daß** die Steuereinrichtung (4) zum Verringern der Sendeenergie oder zum Unterbinden der Abgabe eines Laserpulses ausgebildet ist für den Fall, daß sowohl die auf Grundlage mehrerer Laserpulse ermittelte Kenngröße wie auch die auf Grundlage eines einzigen Laserpulses ermittelte Kenngröße jeweils zugeordnete Grenzwerte übersteigen.

11. Verfahren zum Erfassen eines Objektes oder einer Person im Innenraum eines Fahrzeugs, insbesondere zum Betreiben einer Vorrichtung nach einem der vorhergehenden Ansprüche,
- bei dem Laserpulse ausgesendet werden,
**dadurch gekennzeichnet,**
- **daß** eine für die Sendeenergie des Lasers (2) maßgebende Kenngröße erfaßt wird, und
- **daß** abhängig von der erfaßten Kenngröße die Sendeenergie des Lasers (2) verringert oder die Abgabe eines Laserpulses unterbunden wird.

## Claims

1. Device to detect an object or a person inside a vehicle,
- with a laser (2) to emit a laser pulse,
**characterised in that**
- a detection device (3) is provided to detect a variable for the transmission energy of the laser (2),
and
- that a control device (4) is provided to reduce the transmission energy or to terminate the emission of a laser pulse depending on the variable detected.

2. Device according to Claim 1, **characterised in that** the detection device (3) is configured to detect the variable of a laser pulse.

3. Device according to Claim 1 or Claim 2, **characterised in that** the detection device (3) is configured to detect the variable on the basis of a plurality of emitted laser pulses.

4. Device according to one of the preceding claims, **characterised in that** the detection device (3) is configured to detect a variable for the electrical operating energy of the laser (2).

5. Device according to one of the preceding claims, **characterised in that** the detection device (3) is configured to detect a variable for the radiated energy of the laser (2).

6. Device according to Claim 5, **characterised in that** the detection device (3) has an optical receiver (33) for the laser pulse.

7. Device according to one of the preceding claims, **characterised in that** the control device (4) contains a comparator (41) to compare the energy registered with a limit value (G).

8. Device according to Claim 7, **characterised in that** the control device (4) separates the laser (2) from its energy supply (6) if the limit value (G) is exceeded.

9. Device according to one of the preceding claims, **characterised in that** a control and analysis unit (5) is provided to operate the laser (2) and to analyse the laser pulses reflected off an object or a person (P), and that the control device (4) and the control unit (5) are configured so that they are spatially separate from each other.

10. Device according to Claim 1 and Claim 2, **characterised in that** the control device (4) is configured to reduce the transmission energy or to terminate emission of a laser pulse, if both the variable determined on the basis of a plurality of laser pulses and the variable determined on the basis of a single laser pulse each exceed their assigned limit value.

11. Method for detecting an object or a person inside a vehicle, in particular for operating a device according to one of the preceding claims,
- in which laser pulses are emitted,
**characterised in that**
- a control variable for the transmission energy of the laser (2) is detected, and that
- depending on the detected variable, the transmission energy of the laser (2) is reduced or emission of a laser pulse is terminated.

## Revendications

1. Dispositif de détection d'un objet ou d'une personne dans l'habitacle d'un véhicule muni d'un laser (2) pour émettre une impulsion laser, **caractérisé en ce**
- **qu'**il est prévu un dispositif de détection (3) pour détecter une grandeur caractéristique de l'énergie émise par le laser (2) et
- **qu'**il est prévu un dispositif de commande (4) pour réduire l'énergie émise ou pour inhiber l'émission d'une impulsion laser en fonction de la grandeur caractéristique détectée.

2. Dispositif selon la revendication 1, **caractérisé en ce que** le dispositif de détection (3) est configuré pour détecter la grandeur caractéristique d'une impulsion laser.

3. Dispositif selon la revendication 1 ou la revendication 2, **caractérisé en ce que** le dispositif de détection (3) est configuré pour détecter la grandeur caractéristique en se basant sur plusieurs impulsions laser émises.

4. Dispositif selon l'une des revendications précédentes, **caractérisé en ce que** le dispositif de détection (3) est configuré pour détecter une grandeur caractéristique de l'énergie de fonctionnement électrique du laser (2).

5. Dispositif selon l'une des revendications précédentes, **caractérisé en ce que** le dispositif de détection (3) est configuré pour détecter une grandeur caractéristique de l'énergie rayonnée du laser (2).

6. Dispositif selon la revendication 5, **caractérisé en ce que** le dispositif de détection (3) comprend un récepteur optique (33) pour l'impulsion laser.

7. Dispositif selon l'une des revendications précédentes, **caractérisé en ce que** le dispositif de commande (4) comprend un comparateur (41) pour comparer l'énergie captée avec une valeur limite (G).

8. Dispositif selon la revendication 7, **caractérisé en ce que** le dispositif de commande (4) isole le laser (2) de sa source d'énergie (6) en cas de dépassement de la valeur limite (G).

9. Dispositif selon l'une des revendications précédentes, **caractérisé en ce qu'**il est prévu un module de commande et d'analyse (5) pour commander le laser (2) et pour analyser les impulsions laser réfléchies sur un objet ou sur une personne (P) et que le dispositif de commande (4) et le module de commande (5) sont réalisés de manière à être physiquement séparés l'un de l'autre.

10. Dispositif selon la revendication 1 et la revendication 2, **caractérisé en ce que** le dispositif de commande (4) est réalisé de manière à diminuer l'énergie émise ou à inhiber l'émission d'une impulsion laser dans le cas où à la fois la grandeur caractéristique déterminée en se basant sur plusieurs impulsions laser et la grandeur caractéristique déterminée en se basant sur une seule impulsion laser dépassent les valeurs limites associées respectives.

11. Procédé de détection d'un objet ou d'une personne dans l'habitacle d'un véhicule, notamment de fonctionnement d'un dispositif selon l'une des revendications précédentes, avec lequel sont émises des impulsions laser, **caractérisé en ce**
- **qu'**une grandeur caractéristique de l'énergie émise par le laser (2) est détectée, et
- **que** l'énergie émise par le laser (2) est réduite ou l'émission d'une impulsion laser est inhibée en fonction de la grandeur caractéristique détectée.
